# EUROPEAN PATENT APPLICATION

(11) **EP 3 981 622 A1**
(43) Date of publication of application: **13.04.2022**
(21) Application number: 20822050.9
(22) Date of filing: 04.06.2020
(51) Int. Cl.: B60H 1/34

(54) **AIR OUTLET AND VEHICLE COMPRISING SAME**

(30) Priority: 10.06.2019 CN 201910496260
(71) Applicant: Shanghai Yanfeng Jinqiao Automotive Trim Systems Co., Ltd., Shanghai 201206 (CN)
(72) Inventor: TANG, Yucheng, Shanghai 200233 (CN)
(74) Representative: Trinks, Ole
(86) International application number: PCT/CN2020/094333
(87) International publication number: WO 2020/248891

(57) **Abstract**

An air outlet, comprising: a motor (2), the motor (2) comprising an output shaft (22); a first one-way bearing (31) and a second one-way bearing (32), both the first one-way bearing (31) and the second one-way bearing (32) being connected to the motor (2); an internal layer air guiding device is connected to the first one-way bearing (31); and an external layer air guiding device is connected to the second one-way bearing (32), wherein by means of the forward and backward rotations of the output shaft (22), the motor (2) may: drive the internal layer air guiding device by means of the first one-way bearing (31), and drive the external layer air guiding device by means of the second one-way bearing (32) to achieve switching between two states. The air outlet according to the present technical solution uses a single motor during forward and backward rotations to separately drive the internal layer or external layer air guiding device to reciprocally move so as to adjust air flow in two directions, thereby reducing the mechanical input and reducing costs. Additionally, a vehicle comprising the air outlet is also related to.

## Description

### FIELD OF THE INVENTION

The present invention relates to a vehicle interior trim, and in particular to an air outlet.

### BACKGROUND

In order to regulate the ambient temperature inside a vehicle, an air-conditioning outlet is typically arranged on the dashboard or the console of the vehicle. With interior trims becoming more intelligent, the electric regulation and air sweeping functions of air outlets are becoming a trend.

For a conventional air outlet, movements in the vertical and horizontal directions are controlled through two rows of blades arranged in front and back, respectively, and two motors are employed to implement electric regulation in different directions, posing high costs in motors and driving.

Therefore, a novel air outlet is desired.

### SUMMARY

In order to solve the above-mentioned problems of a larger quantity and high costs of the motors for electric regulation of the air outlets in the prior art as well as the problem of additional mechanical action input required for power switching, the present invention aims to provide a novel air outlet and a vehicle comprising the same, wherein inner and outer air guiding devices are controlled through a single motor, resulting in lower costs and less mechanical input.

According to one aspect of the present invention, provided is an air outlet, which comprises: a motor comprising an output shaft; a first one-way bearing and a second one-way bearing, both of which are coupled to the motor; an inner air guiding device coupled to the first one-way bearing; and an outer air guiding device coupled to the second one-way bearing; wherein by means of the forward and reverse rotation of the output shaft, the motor is capable of 1) driving the inner air guiding device through the first one-way bearing, and 2) driving the outer air guiding device to switch between two states through the second one-way bearing.

A one-way bearing is one that is free to rotate in one direction and locked in the other direction. One-way bearings are also known as overrunning clutches.

The first one-way bearing and the second one-way bearing may be directly or indirectly connected to the motor. The inner air guiding device is an air guiding device that is close to an inner side of the air outlet, and the outer air guiding device is an air guiding device that is close to an outer side of the air outlet. The outer air guiding device is closer to the space in the vehicle than the inner air guiding device. One of the inner and outer air guiding devices can vertically control the direction of airflow, and the other can horizontally control the direction of airflow. In some embodiments, the inner air guiding device may be an inner blade, for example, a vertical blade, to horizontally control the direction of airflow. In some embodiments, the outer air guiding device may be an outer blade, for example, a horizontal blade, to vertically control the direction of airflow. In some embodiments, the inner air guiding device may be a horizontal blade, and the outer air guiding device may be a vertical blade. The inner air guiding device may be directly or indirectly connected to the first one-way bearing. The outer air guiding device may be directly or indirectly connected to the second one-way bearing. The output shaft of the motor may rotate in forward and reverse directions, for example, in clockwise and counterclockwise directions. When the output shaft of the motor rotates in one direction, the inner air guiding device is driven to rotate through the first one-way bearing, and when the output shaft of the motor rotates in the other direction, the outer air guiding device is driven to rotate through the second one-way bearing. Therefore, in the air outlet, a single motor is used to drive the inner air guiding device and the outer air guiding device to reciprocate when the output shaft rotates forward and reversely, respectively, so that regulation of airflow in two directions is achieved while lowering the costs and reducing mechanical input.

In an optional embodiment, the first one-way bearing comprises a first inner ring and a first outer ring, and the second one-way bearing comprises a second inner ring and a second outer ring, the first outer ring and the second outer ring having opposite directions of unidirectional rotation.

The outer ring of the one-way bearing may rotate in one direction and be locked in the other direction relative to its inner ring, that is, when the inner ring of the one-way bearing rotates in one direction, its outer ring rotates therewith, and when the inner ring of the one-way bearing rotates in the other direction, its outer ring does not rotate. The direction of unidirectional rotation of the first one-way bearing may be opposite to that of the second one-way bearing. In this case, when the motor is coupled to the inner rings of the first and second one-way bearings and drives the inner rings to rotate in one direction, the outer ring of one of the first and second one-way bearings rotates with the inner wings, while the outer ring of the other of the first and second one-way bearings does not rotate. Similarly, when the motor is coupled to the outer rings of the first and second one-way bearings and drives the outer rings to rotate in one direction, the inner ring of one of the first and second one-way bearings rotates with the outer rings, while the inner ring of the other of the first and second one-way bearings does not rotate.

In an optional embodiment, the first one-way bearing and the second one-way bearing are stacked on each other.

The first one-way bearing may be arranged above or below the second one-way bearing. The first one-way bearing and the second one-way bearing may have the same specification and size. The first one-way bearing may be aligned with the second one-way bearing, that is, the central axes of the two bearings may be collinear. By stacking the first one-way bearing and the second one-way bearing, the structure can be simplified, the space can be saved, and the coupling of the motor to the first one-way bearing and the second one-way bearing is facilitated.

In an optional embodiment, the output shaft is sleeved in the first inner ring and the second inner ring, the inner air guiding device is coupled to the first outer ring, and the outer air guiding device is coupled to the second outer ring.

By sleeving the output shaft of the motor in the first inner ring of the first one-way bearing and the second inner ring of the second one-way bearing, the structure can be simplified, and the space can be saved. Moreover, as the inner air guiding device is coupled to the first outer ring of the first one-way bearing, and the outer air guiding device is coupled to the second outer ring of the second one-way bearing, the outer air guiding device will not be driven when the motor drives the inner air guiding device through the first one-way bearing, and the inner air guiding device will not be driven when the motor drives the outer air guiding device through the second one-way bearing.

In an optional embodiment, the output shaft serves as the first inner ring and the second inner ring.

By using the output shaft as the first inner ring and the second inner ring, additional first inner ring and second inner ring can be omitted, and the structure is further simplified.

In an optional embodiment, the air outlet comprises an inner air guiding device transmission mechanism and an outer air guiding device transmission mechanism, the inner air guiding device being coupled to the first outer ring through the inner air guiding device transmission mechanism, and the outer air guiding device being coupled to the second outer ring through the outer air guiding device transmission mechanism.

By providing the inner air guiding device transmission mechanism and the outer air guiding device transmission mechanism, the inner air guiding device can be coupled to the first outer ring, and the outer air guiding device can be coupled to the second outer ring.

In an optional embodiment, the inner air guiding device transmission mechanism comprises an inner air guiding device connecting rod coupled to a pivot shaft of the inner air guiding device.

By providing the inner air guiding device connecting rod, the inner air guiding device can rotate around its pivot shaft along with the movement of the inner air guiding device connecting rod. The inner air guiding device may comprise a plurality of air guiding devices, and in this case, the plurality of air guiding devices can simultaneously rotate around their respective pivot shafts along with the movement of the inner air guiding device connecting rod. The inner air guiding device connecting rod may be directly or indirectly connected to the first outer ring of the first one-way bearing so as to be actuated by the first one-way bearing.

In an optional embodiment, the inner air guiding device transmission mechanism comprises a connecting rod, one end of the connecting rod being coupled to the inner air guiding device and the other end of the connecting rod being coupled to the first outer ring. In some embodiments, one end of the connecting rod is provided with a first connecting rod rotating shaft, and the other end of the connecting rod is provided with a second connecting rod rotating shaft. The connecting rod is connected to the inner air guiding device connecting rod through the first connecting rod rotating shaft and coupled to the first outer ring through the second connecting rod rotating shaft.

By providing the connecting rod, the rotation of the first outer ring of the first one-way bearing can be converted into the translational movement of the inner air guiding device connecting rod.

In an optional embodiment, the inner air guiding device transmission mechanism further comprises a gear set; one gear of the gear set is arranged outside the first outer ring, and the other end of the connecting rod is eccentrically connected to the other gear of the gear set. In some embodiments, the connecting rod is eccentrically connected to the other gear of the gear set through the second connecting rod rotating shaft.

By providing the gear set, the gear ratio can be adjusted, which is favorable to the adjustment of the rotation of the inner air guiding device. In an optional embodiment, the outer air guiding device transmission mechanism comprises an outer air guiding device connecting rod coupled to a pivot shaft of the outer air guiding device.

By providing the outer air guiding device connecting rod, the outer air guiding device can rotate around its pivot shaft along with the movement of the outer air guiding device connecting rod. The outer air guiding device may comprise a plurality of air guiding devices, and in this case, the plurality of air guiding devices can simultaneously rotate around their respective pivot shafts along with the movement of the outer air guiding device connecting rod. The outer air guiding device connecting rod may be directly or indirectly connected to the second outer ring of the second one-way bearing so as to be actuated by the second one-way bearing.

In an optional embodiment, the outer air guiding device transmission mechanism comprises a transmission rod, one end of the transmission rod being coupled to the outer air guiding device and the other end being coupled to the outer ring. In some embodiments, one end of the transmission rod is provided with a connecting rod protrusion, and the outer air guiding device connecting rod comprises a sliding groove, in which the connecting rod protrusion is fit for sliding. The transmission rod is further provided with a transmission rod rotating shaft. The transmission rod is rotatable around the transmission rod rotating shaft.

By providing the transmission rod, the translational movement of the outer air guiding device connecting rod is achieved along with the rotation of the transmission rod around the transmission rod rotating shaft and the sliding of the connecting rod protrusion in the sliding groove.

In an optional embodiment, the transmission rod is provided with a track groove protrusion, and outside the second outer ring is provided with a track groove, in which the track groove protrusion is fit for moving. In some embodiments, the track groove protrusion is located between the transmission rod rotating shaft and the connecting rod protrusion.

By the matching of the track groove protrusion arranged on the transmission rod and the track groove arranged outside the second outer ring, the track groove protrusion moves in the vertical direction along with the rotation of the second outer ring, which drives the transmission rod to rotate around the transmission rod rotating shaft, thereby achieving the translational movement of the outer air guiding device connecting rod and the rotation of the outer air guiding device around its pivot shaft.

In an optional embodiment, the air outlet comprises a housing provided inside with the inner air guiding device and the outer air guiding device.

The housing provided can be useful for forming flow channels in the inner air guiding device and the outer air guiding device, and can also protect the inner air guiding device and the outer air guiding device from inappropriate operation caused by direct contact made by a user with the inner air guiding device and the outer air guiding device.

In an optional embodiment, the inner air guiding device is a blade, a roller or a moving block, and the outer air guiding device is a blade, a roller or a moving block.

The inner air guiding device may be a blade, a roller or a moving block, and the outer air guiding device may also be a blade, a roller or a moving block. The inner and outer air guiding devices may be combined at will. For example, the inner and outer air guiding devices are a combination of blades, a combination of a blade and a roller, or a combination of a moving block and a blade.

In an optional embodiment, the outer air guiding device is a set of outer blades comprising two outer blades arranged in parallel, and each of the outer blades comprises two blades hinged to each other.

Airflow can flow through a flow channel formed between two outer air guiding devices. Because each of the outer air guiding devices comprises two blades hinged to each other, flow channels with different orientations can be formed by rotating one of the blades, so that airflow in different directions are obtained. By adopting such outer air guiding devices, the size of the air outlet can be reduced, and the space occupied by the air outlet on the dashboard of a vehicle is saved.

According to another aspect of the present invention, provided is a vehicle comprising the air outlet described above.

In the air outlet disclosed herein, a single motor is used to drive the inner and outer air guiding device to reciprocate when the motor rotates forward and backward, respectively, so that regulation of airflow in two directions is achieved while lowering the costs and reducing mechanical input.

In the following detailed description of preferred embodiments with reference to the accompanying drawings, the above-mentioned advantages and other advantages and characteristics will be easily appreciated.

### BRIEF DESCRIPTION OF DRAWINGS

For a more complete understanding of the present invention, reference should now be made to the embodiments illustrated in greater detail in the accompanying drawings and described below by way of examples of the present invention, wherein:
FIG. 1A is a schematic view of a vehicle comprising an air outlet according to a preferred embodiment of the present invention;
FIG. 1B is an interior schematic perspective view of the vehicle in FIG. 1A;
FIG. 1C is a perspective view of the air outlet in FIG. 1B with a housing removed;
FIG. 2A is a perspective view of the air outlet in FIG. 1C blowing rightward;
FIG. 2B is a perspective view of the air outlet in FIG. 1C blowing leftward;
FIG. 2C is a perspective view of the air outlet in FIG. 1C blowing upward;
FIG. 2D is a perspective view of the air outlet in FIG. 1C blowing downward;
FIG. 3 is an exploded perspective view of the air outlet assembly in FIG. 1C;
FIG. 4A is a perspective view of an outer blade driving component of the air outlet in FIG. 2C blowing downward;
FIG. 4B is a top view of FIG. 4A;
FIG. 4C is a schematic cross-sectional view taken along line C-C in FIG. 4B;
FIG. 4D is a front view of FIG. 4A;
FIG. 4E is a right view of FIG. 4A;
FIG. 5A is a perspective view of the outer blade driving component of the air outlet in FIG. 2D blowing upward;
FIG. 5B is a top view of FIG. 5A;
FIG. 5C is a schematic cross-sectional view taken along line D-D in FIG. 5B;
FIG. 5D is a front view of FIG. 5A;
FIG. 5E is a right view of FIG. 5A;
FIG. 6A is a perspective view of an inner blade driving component of the air outlet in FIG. 2B blowing leftward;
FIG. 6B is a top view of FIG. 6A;
FIG. 6C is a front view of FIG. 6B;
FIG. 6D is a schematic cross-sectional view taken along line F-F in FIG. 6C;
FIG. 7A is a perspective view of the inner blade driving component of the air outlet in FIG. 2A blowing rightward;
FIG. 7B is a top view of FIG. 7A;
FIG. 7C is a front view of FIG. 7B;
FIG. 7D is a schematic cross-sectional view taken along line F-F in FIG. 7C;
FIG. 8A is a perspective view of the air outlet assembly in FIG. 1C;
FIG. 8B is a top view of FIG. 1C;
FIG. 8C is a schematic cross-sectional view taken along line A-A in FIG. 8B;
FIG. 9A is a schematic perspective view of an inner blade transmission mechanism of the air outlet in FIG. 1C;
FIG. 9B is a top view of FIG. 9A;
FIG. 10A is a schematic perspective view of an outer blade transmission mechanism of the air outlet in FIG. 1C;
FIG. 10B is a top view of FIG. 10A;
FIG. 10C is a partially enlarged view of FIG. 10B;
FIG. 10D is a schematic cross-sectional view taken along line B-B in FIG. 10C;
FIG. 10E is a partial perspective view of FIG. 10A; and
FIG. 10F is another partial perspective view of FIG. 10A.

### DETAILED DESCRIPTION

As one of ordinary skill in the art will appreciate, various characteristics of the embodiments illustrated and described with reference to any one of the accompanying drawings may be combined with characteristics illustrated in one or more other accompanying drawings to produce other embodiments that are not explicitly illustrated or described. The combination of the characteristics shown provides a representative embodiment for typical application. However, various combinations and modifications of the characteristics consistent with the teachings disclosed herein may be desired for particular application or implementation.

In the present specification, the directional terms such as "upper", "lower", "left", and "right" are used for convenience of description, and are not restrictive.

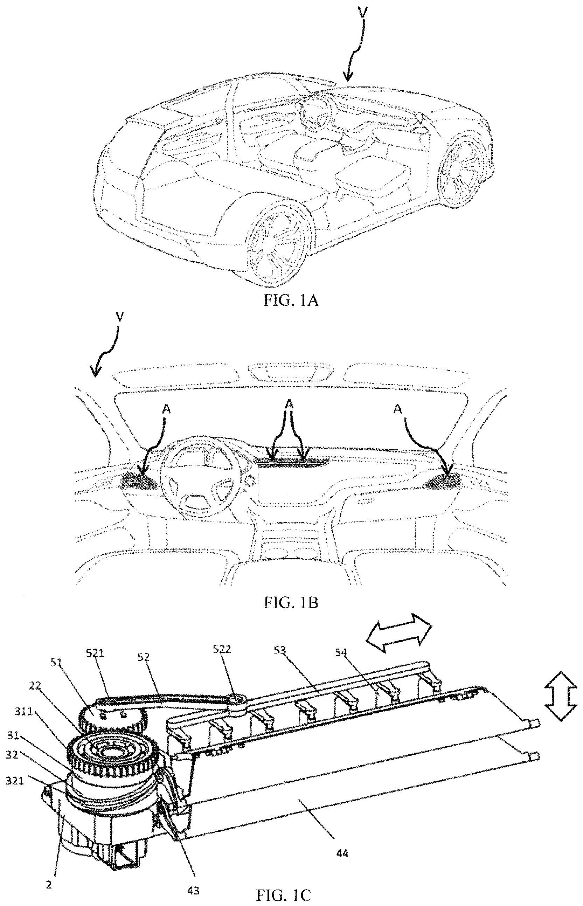

FIG. 1A is a schematic view of a vehicle comprising an air outlet according to a preferred embodiment of the present invention, and FIG. 1B is an interior schematic perspective view of the vehicle in FIG. 1A. According to an exemplary embodiment, a vehicle V comprises an interior having a dashboard with air outlets A according to a preferred embodiment of the present invention arranged in the center of and on both sides of the dashboard. It should be understood that the air outlet A may be arranged only in the center of the dashboard, or arranged in any other position as needed.

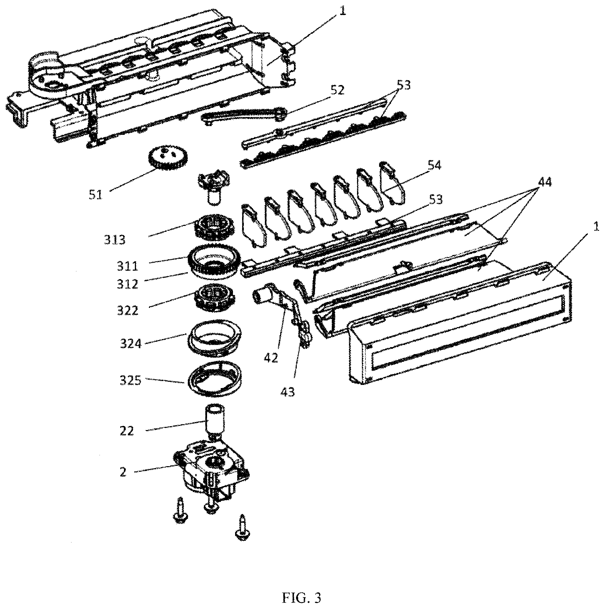

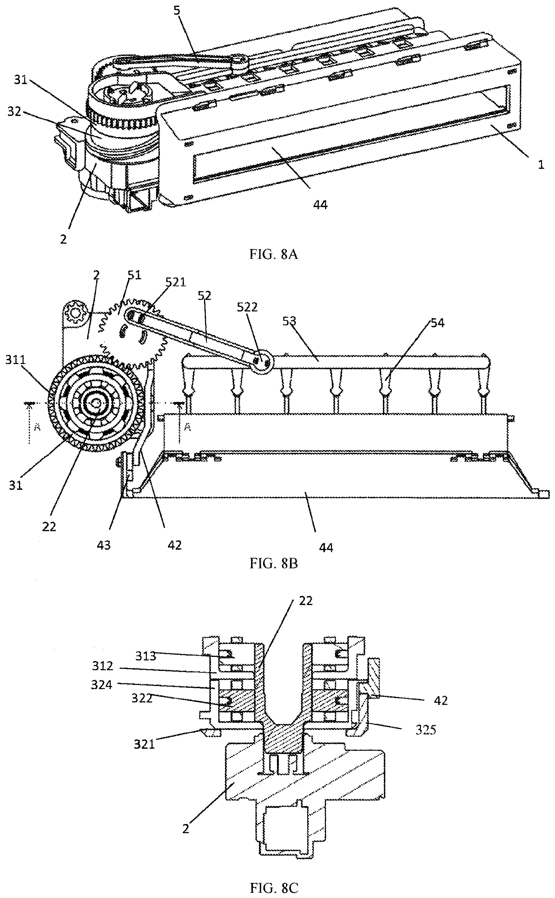

FIG. 1C is a schematic perspective view of the air outlet in FIG. 1B with the housing removed; FIG. 3 is an exploded perspective view of the air outlet assembly in FIG. 1C; FIG. 8A is a perspective view of the air outlet assembly in FIG. 1C; FIG. 8B is a top view of FIG. 1C. It can be seen that the air outlet comprises: a motor 2, an output shaft 22, a first one-way bearing 31, a second one-way bearing 32, outer blades 44, inner blades 54, and a housing 1. The inner blades 54 and the outer blades 44 are all arranged within the housing 1. The output shaft 22 is arranged on the motor 2 and is configured to pass through the first one-way bearing 31 and the second one-way bearing 32; a track groove 321 is provided along the circumference of the second one-way bearing 32, and a gear 311 is provided along the circumference of the first one-way bearing 31. The air outlet further comprises a transmission gear 51, a connecting rod 52, an inner blade connecting rod 53 and an outer blade connecting rod 43. Both the first one-way bearing 31 and the second one-way bearing 32 are coupled to the motor 2. The inner blades 54 are coupled to the first one-way bearing 31 and the outer blades 44 are coupled to the second one-way bearing 32. By means of forward and reverse rotation of the output shaft 22, the motor 2 drives the inner blades 54 and the outer blades 44 through the first one-way bearing 31 and the second one-way bearing 32, respectively. In the illustrated embodiment, the first one-way bearing 31 and the second one-way bearing 32 are stacked on each other with the first one-way bearing 31 located above the second one-way bearing 32.

FIG. 8C is a schematic cross-sectional view taken along line A-A in FIG. 8B, in which the first one-way bearing 31 comprises a first inner ring and a first outer ring 312, and the second one-way bearing 32 comprises a second inner ring and a second outer ring. The second outer ring is assembled from an upper ring component 324 and a lower ring component 325 so as to form the track groove 321 between the upper ring component 324 and the lower ring component 325; more specifically, in the second outer ring, the upper ring component 324 provides an upper inner surface of the track groove 321, and the lower ring component 325 provides a lower inner surface of the track groove 321. Such configuration facilitates the demolding in the manufacture of the second outer ring. The first outer ring 312 and the second outer ring have opposite directions of unidirectional rotation; the output shaft 22 is mounted on the motor 2, and is configured to pass through the first one-way bearing 31 and the second one-way bearing 32 and is then sleeved in the first inner ring and the second inner ring (in the illustrated embodiment, the output shaft 22 serves as the first inner ring and the second inner ring, so the additional first inner ring and the second inner ring are omitted); the transmission rod 42 is engaged with the second one-way bearing 32 in the Z-direction through the track groove 321; when the second outer ring of the second one-way bearing 32 rotates, a driving rod 42 changes the height in the Z-direction according to the position of the track groove 321.

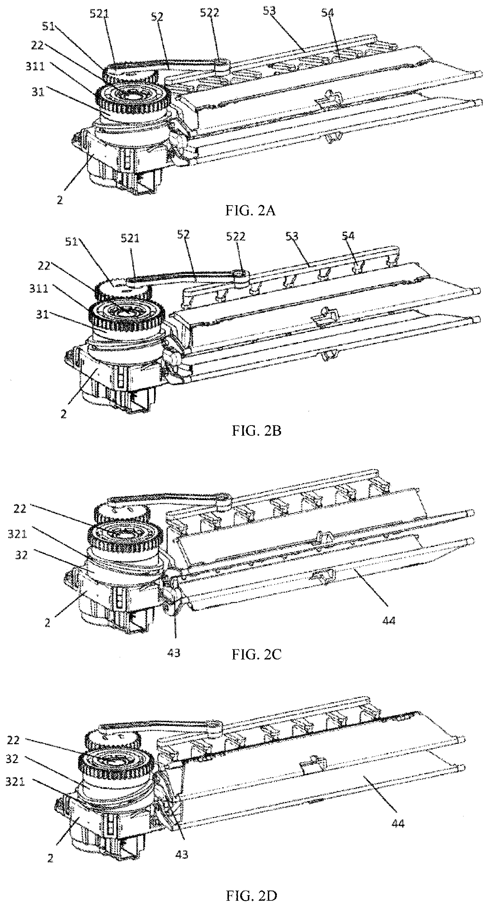

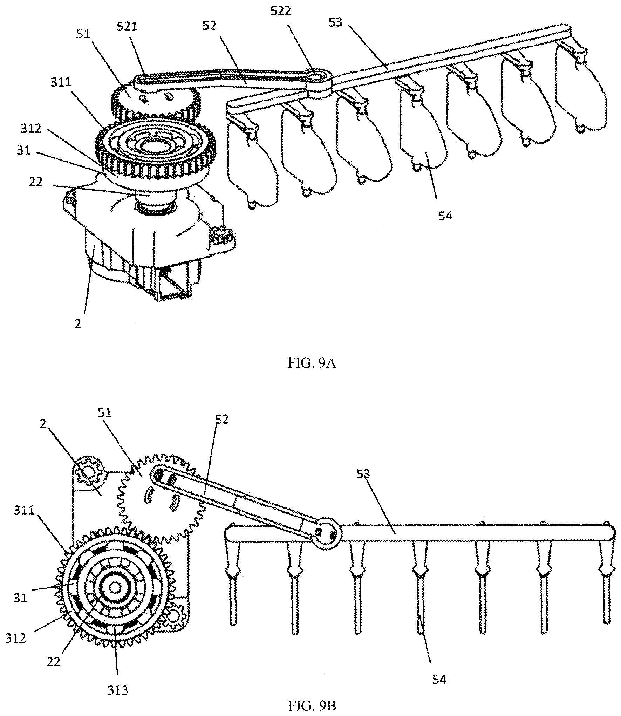

FIG. 9A is a schematic perspective view of an inner blade transmission mechanism of the air outlet in FIG. 1C; FIG. 9B is a top view of FIG. 9A; FIG. 2A is a perspective view of the air outlet in FIG. 1C blowing rightward; FIG. 2B is a perspective view of the air outlet in FIG. 1C blowing leftward. The inner blades 54 are coupled to the first outer ring 312 through an inner blade transmission mechanism. The inner blade transmission mechanism comprises an inner blade connecting rod 53 coupled to pivot shafts of the inner blades 54. The inner blade transmission mechanism further comprises a connecting rod 52, wherein one end of the connecting rod 52 is provided with a first connecting rod rotating shaft 522 and the other end of the connecting rod 52 is provided with a second connecting rod rotating shaft 521, and the connecting rod 52 is connected to the inner blade connecting rod 53 through the first connecting rod rotating shaft 522 and coupled to the first outer ring 312 through the second connecting rod rotating shaft 521. The inner blade transmission mechanism further comprises a gear set, wherein one gear 311 of the gear set is arranged outside the first outer ring 312, and the connecting rod 52 is eccentrically connected to the other gear of the gear set, i.e., the transmission gear 51, through the second connecting rod rotating shaft 521.

When the motor 2 rotates clockwise, the output shaft 22 rotates clockwise, the second one-way bearing 32 slips and does not rotate, the first one-way bearing 31 is engaged to transmit the rotation of the output shaft 22 to the gear 311 of the first outer ring 312, and the gear 311 is engaged with the transmission gear 51 to drive the transmission gear to rotate; the second connecting rod rotating shaft 521 at one end of the connecting rod 52 is eccentrically arranged on the transmission gear 51, so that the rotation is converted into the reciprocation of the first connecting rod rotating shaft 522 at the other end along the Y-direction so as to drive the inner blade connecting rod 53 to reciprocate and the inner blades 54 to swing from side to side. First wedges 313 are circumferentially arranged between the output shaft 22 and an inner wall of the first outer ring 312 of the first one-way bearing 31; when the output shaft 22 rotates counterclockwise, the first wedges 313 slip and do not rotate; when the output shaft 22 rotates clockwise, the first wedges 313 are each engaged to lock the relative movement of output shaft 22 to the inner wall of the first outer ring 312, causing the first one-way bearing 32 to rotate clockwise.

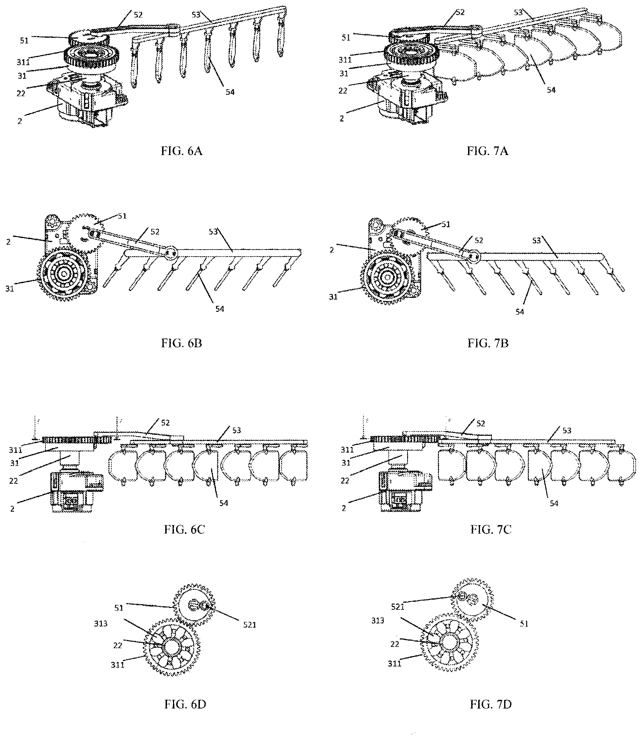

FIG. 6A is a perspective view of the inner blade driving component of the air outlet in FIG. 2B blowing leftward; FIG. 6B is a top view of FIG. 6A, in which the transmission gear 51 drives the connecting rod 52 to push the inner blade connecting rod 53 to the right, which drives the inner blades 54 to deflect to the left; FIG. 6C is a front view of FIG. 6B; FIG. 6D is a schematic cross-sectional view taken along line F-F in FIG. 6C, in which the gear 311 of the first one-way bearing 31 drives the transmission gear 51 to rotate, causing the second connecting rod rotating shaft 521 to rotate to the right.

FIG. 7A is a perspective view of the inner blade driving component of the air outlet in FIG. 2A blowing rightward; FIG. 7B is a top view of FIG. 7A, in which the transmission gear 51 drives the connecting rod 52 to pull the inner blade connecting rod 53 to the left, which drives the inner blades 54 to deflect to the right; FIG. 7C is a front view of FIG. 7B; FIG. 7D is a schematic cross-sectional view taken along line F-F in FIG. 7C, in which the gear 311 of the first one-way bearing 31 drives the transmission gear 51 to rotate, causing the second connecting rod rotating shaft 521 to rotate to the left.

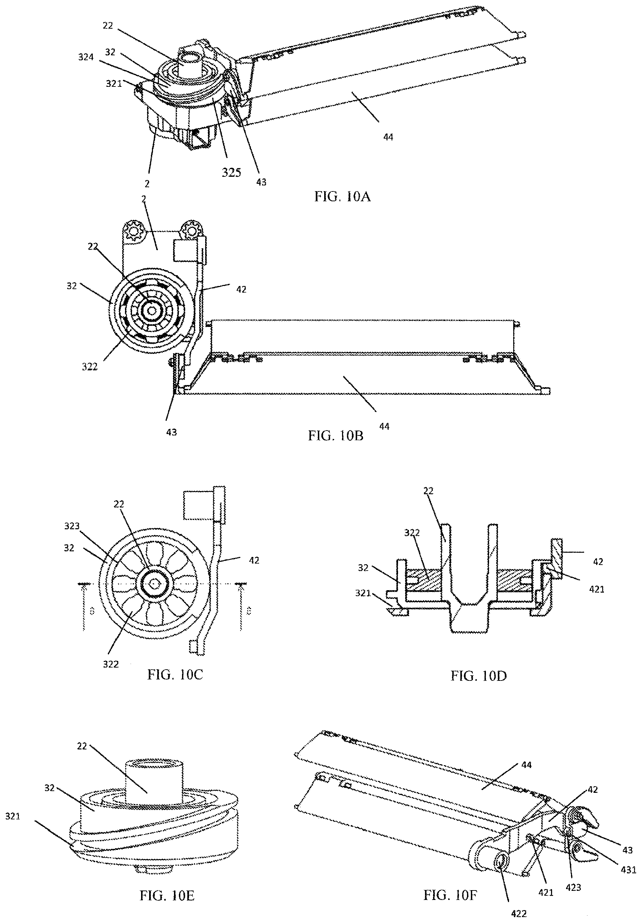

FIG. 10A is a schematic perspective view of the outer blade transmission mechanism of the air outlet in FIG. 1C; FIG. 10B is a top view of FIG. 10A; FIG. 2C is a perspective view of the air outlet in FIG. 1C blowing upward; FIG. 2D is a perspective view of the air outlet in FIG. 1C blowing downward. The outer blades 44 are coupled to the second outer ring through an outer blade transmission mechanism. The outer blade transmission mechanism comprises an outer blade connecting rod 43 coupled to pivot shafts of the outer blades 44.

When the motor 2 rotates counterclockwise, the output shaft 22 rotates counterclockwise, the first one-way bearing 31 slips and does not rotate, the second one-way bearing 32 is engaged to transmit the rotation of the output shaft 22 to the track groove 321 of the second outer ring, and the different heights of the track groove 321 in the Z-direction control the angle of swing of the transmission rod 42 to further control the position of the outer blade connecting rod 43 in the Z-direction, thus driving the outer blades 44 to swing.

FIG. 10C is a partially enlarged view of FIG. 10B, in which the transmission rod 42 is arranged tangential to the outside of the second one-way bearing 32; second wedges 322 are circumferentially arranged between the output shaft 22 and an inner wall 323 of the second outer ring of the second one-way bearing 32; when the output shaft 22 rotates clockwise, the second wedges 322 slip and do not rotate; when the output shaft 22 rotates counterclockwise, the second wedges 322 are engaged to lock the relative movement of the output shaft 22 to the inner wall 323, causing the second one-way bearing 32 to rotate counterclockwise. The working principle of the one-way bearing is not described in detail here.

In fact, the second wedges 322 in FIG. 10C and the first wedges 313 in FIG. 9B are the same in configuration but are arranged in opposite directions relative to the axial direction of the output shaft 22, which enables the first one-way bearing 31 and the second one-way bearing 32 to be engaged in turn at the time of clockwise and counterclockwise rotation of the output shaft 22, respectively, thus outputting the rotation in the two directions to the inner and outer blades, respectively.

FIG. 10D is a schematic cross-sectional view taken along line B-B in FIG. 10C, in which the transmission rod 42 has a track groove protrusion 421 embedded in the track groove 321 of the second outer ring of the second one-way bearing 32. When the second one-way bearing 32 rotates, the position of the track groove protrusion 421 moves up and down along the Z-direction under constraint of the track groove 321.

FIG. 10E is a partial perspective view of FIG. 10A. In this embodiment, the track groove 321 has an elliptical shape.

FIG. 10F is another partial perspective view of FIG. 10A, in which the transmission rod 42 is provided with a transmission rod rotating shaft 422 that can be rotatably arranged on the housing of the air outlet; the transmission rod 42 is also provided with a track groove protrusion 421 and a connecting rod protrusion 423; the outer blade connecting rod 43 is provided with a sliding groove 431; the connecting rod protrusion 423 is slidably constrained by the sliding groove 431 along the X-direction, and when the track groove protrusion 421 is driven to move up and down along the Z-direction, the connecting rod protrusion 423 drives the outer blade connecting rod 43 to move along the Z-direction, thus driving the outer blade 44 to swing up and down.

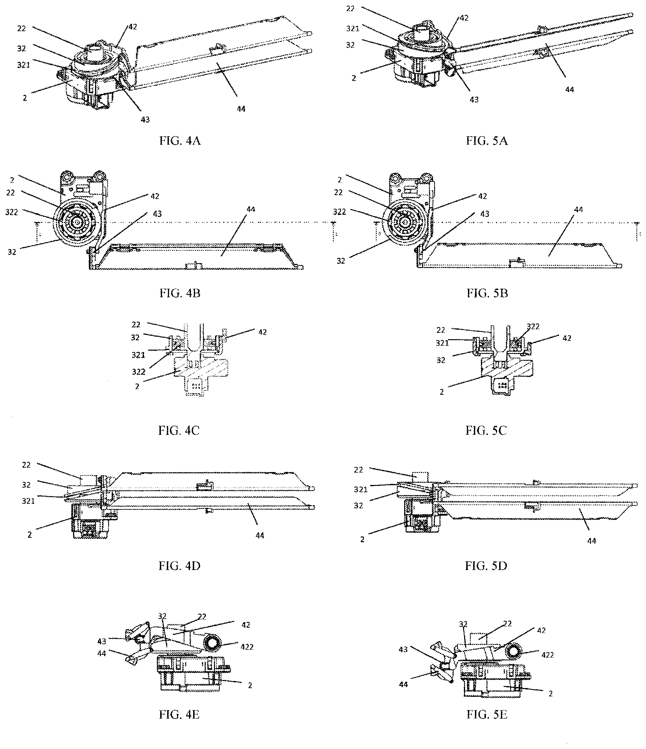

FIG. 4A is a perspective view of the outer blade driving component of the air outlet in FIG. 2C blowing downward; FIG. 4B is a top view of FIG. 4A; FIG. 4C is a schematic cross-sectional view along line C-C in FIG. 4B, in which the left side of the track groove 321 of the second one-way bearing 32 rotates to the lowest point and the right side rotates to the highest point to drive the transmission rod 42 to swing upward to the highest point; FIG. 4D is a front view of FIG. 4A; FIG. 4E is a right view of FIG. 4A, in which the transmission rod 42 drives the outer blade connecting rod 43 to move to the highest point, so that the outer blades 44 are turned downward to the lower extreme position.

FIG. 5A is a perspective view of the outer blade driving component of the air outlet in FIG. 2D blowing upward; FIG. 5B is a top view of FIG. 5A; FIG. 5C is a schematic cross-sectional view taken along line D-D in FIG. 5B, in which the left side of the track groove 321 of the second one-way bearing 32 rotates to the highest point and the right side rotates to the lowest point to drive the transmission rod 42 to swing downward to the lowest point; FIG. 5D is a front view of FIG. 5A; FIG. 5E is a right view of FIG. 5A, in which the transmission rod 42 drives the outer blade connecting rod 43 to move to the lowest point, so that the outer blades 44 are turned upward to the upper extreme position.

In the illustrated embodiment, two outer blades 44 are present and arranged in parallel, and each outer blade comprises two blades hinged to each other. By rotating one of the blades, flow channels with different orientations can be formed, so that airflows in different directions are obtained. It should be understood that instead of being structured as in the above-mentioned illustrated embodiment, the outer blades may have the structure of a blade set, i.e., a structure similar to that of the inner blades in the illustrated embodiment.

It should be understood that the inner air guiding device and the outer air guiding device, although being described above as the inner blades and the outer blades, may also be in the form of a moving block or a roller, and may be combined at will. For example, the inner and outer air guiding devices are a combination of blades, a combination of a blade and a roller, or a combination of a moving block and a blade.

One skilled in the art will readily recognize, from such discussion and the accompanying drawings and claims, that various changes, modifications and variations can be made therein without departing from the true spirit and fair scope of the present invention defined by the following claims.

## Claims

1. An air outlet, comprising:
- a motor comprising an output shaft;
- a first one-way bearing and a second one-way bearing, both being coupled to the motor;
- an inner air guiding device coupled to the first one-way bearing; and
- an outer air guiding device coupled to the second one-way bearing; wherein by means of forward and reverse rotation of the output shaft, the motor is capable of 1) driving the inner air guiding device through the first one-way bearing, and 2) driving the outer air guiding device to switch between two states through the second one-way bearing.

2. The air outlet according to claim 1, wherein the first one-way bearing comprises a first inner ring and a first outer ring, and the second one-way bearing comprises a second inner ring and a second outer ring, the first outer ring and the second outer ring having opposite directions of unidirectional rotation.

3. The air outlet according to claim 2, wherein the first one-way bearing and the second one-way bearing are stacked on each other.

4. The air outlet according to claim 3, wherein the output shaft is sleeved in the first inner ring and the second inner ring; the inner air guiding device is coupled to the first outer ring, and the outer air guiding device is coupled to the second outer ring.

5. The air outlet according to claim 4, wherein the output shaft serves as the first inner ring and the second inner ring.

6. The air outlet according to claim 4, wherein the air outlet comprises an inner air guiding device transmission mechanism and an outer air guiding device transmission mechanism, the inner air guiding device being coupled to the first outer ring through the inner air guiding device transmission mechanism, and the outer air guiding device being coupled to the second outer ring through the outer air guiding device transmission mechanism.

7. The air outlet according to claim 6, wherein the inner air guiding device transmission mechanism comprises a connecting rod, one end of the connecting rod being coupled to the inner air guiding device and the other end of the connecting rod being coupled to the first outer ring.

8. The air outlet according to claim 7, wherein the inner air guiding device transmission mechanism further comprises a gear set, one gear of the gear set being arranged outside the first outer ring, and the other end of the connecting rod being eccentrically connected to the other gear of the gear set.

9. The air outlet according to claim 6, wherein the outer air guiding device transmission mechanism comprises a transmission rod, one end of the transmission rod being coupled to the outer air guiding device and the other end being coupled to the second outer ring.

10. The air outlet according to claim 9, wherein the transmission rod is provided with a track groove protrusion, and outside the second outer ring is provided with a track groove, the track groove protrusion being fit for moving in the track groove.

11. The air outlet according to any one of claims 1 to 10, wherein the inner air guiding device is a blade, a roller or a moving block, and the outer air guiding device is a blade, a roller or a moving block.

12. The air outlet according to claim 1, wherein the outer air guiding device is a set of outer blades comprising two outer blades arranged in parallel, and each of the outer blades comprises two blades hinged to each other.

13. A vehicle, comprising the air outlet according to any one of claims 1 to 12.
